# EUROPEAN PATENT SPECIFICATION

(11) **EP 0 599 938 B1**
(45) Date of publication and mention of the grant of the patent: **22.01.1997**
(21) Application number: 92917706.1
(22) Date of filing: 07.08.1992
(51) Int. Cl.: A23J 1/02, A23J 3/04, A23L 1/0562, A23L 1/314

(54) **POULTRY-DERIVED GROUND RED MEAT SUBSTITUTE AND ITS METHOD OF MANUFACTURE**
GEMAHLENES ROTES FLEISCH ERSATZ AUS GEFLÜGEL
SUCCEDANE DE VIANDE ROUGE HACHEE DERIVE DE VOLAILLE ET SON PROCEDE DE PRODUCTION

(30) Priority: 09.08.1991 US 743119
(43) Date of publication of application: 08.06.1994
(73) Proprietor: GRIFFITH LABORATORIES WORLDWIDE, INC., Alsip, IL 60658-3495 (US)
(72) Inventor: YAIKO, Leonard, Midlothian, IL 60445 (US); WAGNER, Jeffrey Michael, Lisle, IL 60532 (US)
(74) Representative: Allden, Thomas Stanley
(86) International application number: PCT/US92/06603
(87) International publication number: WO 93/02569

(56) References cited:
- EP-A- 0 064 104
- EP-A- 0 445 369
- DE-A- 137 231
- PATENT ABSTRACTS OF JAPAN vol. 010, no. 107 (C-341)22 April 1986
- JOURNAL OF FOOD SCIENCE. vol. 52, no. 6, 1987, CHICAGO US pages 1495 - 1499 E.A. FOEGEDING "Functional properties of turkey salt-soluble proteins"
- CHEMICAL ABSTRACTS, vol. 84, no. 11, March 1976, Columbus, Ohio, US; abstract no. 72694m, L.L. LOUIS 'Aqueous Extraction of Protein Isolate from Mechanically Deboned Poultry Meat' page 325 ;

## Description

This invention relates generally to a proteinaceous material suitable as a red meat substitute and to a process for its preparation.

Many people prefer poultry over red meat due to economic and other considerations. There are numerous popular food products utilizing ground red meat such as taco fillings, pizza toppings, spaghetti sauces and chilli. Those preferring poultry over red meat would consider it highly desirable to be able to have poultry-derived substitutes for ground red meat in these food products.

It is known that poultry and other meats contain certain salt-soluble proteins, and that these can be extracted and heated to form solid gels. Thus, for example, E.A. Foegeling, Journal of Food Science, Vol. 52, No. 6, pp. 1495-1499, 1987 discloses the comparative functional properties of turkey salt-soluble proteins from the thigh and breast, and Oosaka Kanetetsu Shiyokuhin K.K., Patent Abstracts of Japan, Vol 10, No. 107 (C-341) 22 April 1986, and Japanese patent application No. 60-237967 disclose a method of manufacturing a product resembling a ham from the salt-soluble protein of fish meat.

We have now found that the salt-soluble protein extracted from poultry can be treated to provide a substitute for ground red meat.

According to the present invention, there is provided a process for preparing a poultry-derived proteinaceous material suitable as a ground red meat substitute, which process comprises: extracting salt-soluble proteinaceous material from poultry; cooking the extracted proteinaceous material until gelled into a solid mass; and grinding the solid mass to produce comminuted pieces.

For purposes of the present invention, the term "poultry" is to be understood to encompass domesticated birds raised for this food value, including chickens, ducks, geese, guinea fowl, squab, turkeys, and domestically raised game birds (pheasant and quail). The term "red meat" is to be understood to encompass all edible parts of muscle of cattle, sheep, swine, or goats that is skeletal (see Food Science Sourcebook, Second Edition, Part 1, by Herbert W. Ockerman, 1991).

In accordance with a preferred embodiment of the present invention, salt-soluble poultry proteinaceous material (myosin) is extracted by blending ground poultry muscle with an aqueous mixture of salt, phosphate, flavouring and colouring, cooking the blend and grinding it. In another preferred embodiment, the source of poultry protein is mechanically deboned poultry, which is described below. Preferably, the cooking step is carried out in the presence of a low concentration of a food grade acid to produce a firmer textured end product. The ground extracted proteinaceous material can be subjected to a second heat processing step, most preferably in the presence of a low concentration of a food grade acid, also to produce a firmer textured end product.

Following the removal of the whole muscle cuts from poultry, a significant amount of edible poultry muscle remains on the carcass. Such poultry muscle can be recovered as "mechanically deboned poultry", in a process which calls for grinding the poultry carcass into a homogenous mass which is forced against a plate with small orifices. The poultry proteinaceous material and marrow pass through the orifices, while all of the bones, tendons, and solid material are held back and discarded. The resulting poultry proteinaceous material is comparable to the consistency of peanut butter.

Thus, in accordance with one preferred embodiment of the invention, salt-soluble proteinaceous material is extracted by blending the deboned poultry with an aqueous mixture of salt, phosphate, flavourings, seasonings and colouring. The level of salt relative to mechanically deboned poultry should be in the range of about 0.1 to about 5.0 percent by weight salt to deboned poultry, and preferably about 0.5 to about 2.5 percent by weight. The flavourings which may be used include standard red meat flavourings and seasonings. Caramel and other approved food colourings are used to give the resultant product a ground red meat appearance, with caramel colouring presently preferred. The mixing time will vary depending upon the type of equipment used and the desired texture, but will typically be in the range of about 1 to 15 minutes and preferably about 3 to 10 minutes.

After it is extracted, the proteinaceous material is cooked at a temperature of about 60 to 260°C (140° to 500°F), and preferably about 93.3 - 148.9°C (200 - 300°F), until gelled and browned. Dry heat is the preferred means of cooking the product because dry heat deepens the colour and gives the proteinaceous material a more desirable flavour. As the proteinaceous material cooks, it gels into a solid mass.

If a firmer texture is required, the heating step can be carried out in the presence of a low concentration of a food grade acid such as citric, tartaric, succinic, adipic, fumaric or malic. Citric acid is presently preferred. When acid is used, the eventual Normality of the mixture should be about 0.003 to 0.645, and preferably 0.161 to 0.322. When citric acid is used, this corresponds to an amount by weight, of 0.01 to 2.0% and 0.5 to 1%, respectively.

After cooking, comminuted proteinaceous material of the desired size is produced by running the proteinaceous material through a grinder plate while it is still hot or after it has cooled.

The proteinaceous material may then be chilled or mixed with other seasonings or with sauces to create final products such as taco fillings, pizza toppings, spaghetti sauces and chilli.

In another embodiment of the invention, a firmer end product is produced by further cooking the comminuted proteinaceous material pieces obtained in the grinding step. This may be done by adding water to the comminuted material and then heating the mixture to produce an internal temperature of the comminuted material of at least 104.4°C (220°F) for at least about 1 minute. In a preferred embodiment, the internal temperature of the comminuted material will be raised to at least about 115.6°C (240°F) for about 30 minutes.

In another embodiment, the water which is added to the comminuted material before heating, is acidified with a low level of a food grade acid such as tartaric, succinic, adipic, fumaric or malic acid. Citric acid is presently preferred. Sufficient acid should be used to achieve a Normality of about 0.003 to 0.645 and preferably 0.161 to 0.322. When citric acid is used, this corresponds to an amount by weight of 0.01 to 2.0% and 0.5 to 1%, respectively.

According to another aspect of the present invention, there is provided a ground red meat substitute prepared by the process comprising: extracting salt-soluble proteinaceous material from poultry; flavouring and colouring the extracted proteinaceous material; cooking the extracted proteinaceous material until gelled into a solid mass; and grinding the solid mass to produce comminuted pieces.

In a yet further aspect of the present invention, there is provided a food product comprising: the appropriate ingredients, less ground red meat, for making a food product chosen from the group consisting of taco fillings, pizza toppings, spaghetti sauces and chilli; and a ground red meat substitute prepared by: extracting salt-soluble proteinaceous materials from mechanically deboned poultry; flavouring and colouring the extracted proteinaceous material; cooking the extracted proteinaceous material until gelled or solidified into a solid mass; and grinding the solid mass to produce comminuted pieces.

The following Examples are illustrative of the present invention and are not intended to limit the invention in any way.

### EXAMPLE 1

Mechanically deboned poultry (45.36 Kg) is combined with the following ingredients:

| | Kg(lb) |
|---|---|
| Salt | 0.4536 (1.000) |
| Dextrose | 0.2268 ( .5000) |
| Phosphate | 0.1134 ( .2500) |
| Beef-type flavouring | 0.1134 ( .2500) |
| Hydrolyzed vegetable protein | 0.1134 ( .2500) |
| Garlic Powder | 0.0284 ( .0625) |
| Caramel colour | 0.0284 ( .0625) |

The above ingredients are mixed with the poultry to extract salt-soluble proteinaceous material therefrom and to flavour it. The extract is then cooked, ground through a 0.0127m (one-half inch) plate, and chilled.

### EXAMPLE 2

### Taco Mixture

2.177Kg of the poultry proteinaceous material of Example 1 is mixed with the following ingredients to make a taco filling:

| | Kg(lb) |
|---|---|
| Water | 0.227 (.500) |
| Tomato paste | 0.136 (.300) |
| Taco seasoning | 0.139 (.306) |

All of the ingredients are blended and simmered to 82.2°C (180°F). The resulting product is aesthetically and organoleptically indistinguishable from its ground red meat-based counterpart.

### EXAMPLE 3

### Chilli

1.3608 Kg of the poultry proteinaceous material of Example 1 is mixed with the following ingredients to create chilli:

| | Kg(lb) |
|---|---|
| Crushed tomatoes in sauce | 1.5876 (3.5) |
| Canned kidney beans | 1.3608 (3.0) |
| Chopped onion | 0.0750 |
| Chilli seasoning | 0.0350 |
| Ground cumin | 0.0015 |
| Granulated garlic | 0.0010 |

The onion is rehydrated before cooking. All of the ingredients are blended and simmered for one hour. The resulting product is aesthetically and organoleptically indistinguishable from its ground red meat-based counterpart.

### EXAMPLE 4

Poultry proteinaceous material of Example 1 is substituted or combined with ground red meat and with appropriate seasonings or sauces to create final food products, these will likewise be aesthetically and organoleptically indistinguishable from their ground red meat-based counterparts.

### EXAMPLE 5

This Example is similar to Example 1, except that the extracted protein was cooked using a small steam kettle with solutions of:

| | |
|---|---|
| Water | 97.0% |
| Citric Acid | 0.5% (0.161 N) and 1.0% (0.322N) |
| Flavour | 2.5% |

The ingredients are cooked in the acidified solutions until an internal temperature of 71.1°C (160°F) is obtained in the extracted proteinaceous material.

The resulting product has a modified, slightly firmer texture than that prepared in Example 1. Additionally, the product of this Example has a greater resistance to oxidation than that of Example 1.

### EXAMPLE 6

The cooked and ground, blended poultry proteinaceous material of Example 1 is subjected to a retort cook in the presence of acid, as described below.

Five different concentrations of citric acid were used: 0.125% (0.04N), 0.25% (0.08N), 0.5% (0.161N), 1.0% (0.322N), 1.5% (0.483N), and 2.0% (0.645N). The samples of the cooked and ground blended poultry proteinaceous material were retorted at 115.6°C (240°F) for 45 minutes. A sensory evaluation ranking test was conducted to determine how the cooked and ground blended poultry proteinaceous material that was retorted in 0.5%, and 1.0% citric acid solutions ranked in firmness compared to the control (no acid, only water).

A Least Squared Difference Test wherein α = 0.5 was run to determine the difference between samples, with the following results:

| | Control | 0.5% | 1.0% |
|---|---|---|---|
| Control | --- | 0.028277 | 0.821723 |
| 0.5% | 0.028277 | --- | 0.016407 |
| 1.0% | 0.821723 | 0.016407 | --- |

In this table, any difference of less than 0.5 represents a significant difference in firmness. To conclude:
(a) the control was significantly less firm than the sample prepared with 0.5% citric acid;
(b) the control was not significantly different in firmness than the sample prepared with 1.0% citric acid; and
(c) the sample prepared with 0.5% citric acid was significantly firmer than the sample prepared with 1.0% citric acid.

The above data indicated that the cooked and ground, blended poultry proteinaceous material retorted in a 0.5% solution of citric acid was significantly firmer than the cooked and ground, blended poultry proteinaceous material which was retorted in water alone. The cooked and ground, blended poultry proteinaceous material that was retorted in a 1.0% solution of citric acid was not significantly firmer than that which was in water alone.

## Claims

1. A process for preparing a poultry-derived proteinaceous material suitable as a ground red meat substitute, which process comprises:
(a) extracting salt-soluble proteinaceous material from poultry;
(b) cooking the extracted proteinaceous material until gelled into a solid mass;
and
(c) grinding the solid mass to produce comminuted pieces.

2. A process according to claim 1, including the step of flavouring and colouring the extracted proteinaceous material before it is cooked.

3. A process according to claim 1 or 2, wherein the poultry is mechanically deboned poultry.

4. A process according to claim 1, 2 or 3, wherein the cooking step (b) is carried out in the presence of a small amount of a food grade acid.

5. A process according to claim 4, wherein the acid is citric, tartaric, succinic, adipic, fumaric or malic.

6. A process according to claim 4 or 5, wherein the amount of acid is sufficient to provide a Normality of from 0.003 to 0.645.

7. A process according to any preceding claim, wherein in step (b) the extracted proteinaceous material is cooked at a temperature of 60°C to 260°C (140°F to 500°F).

8. A process according to any preceding claim, wherein after step (c), water is added to the comminuted pieces which are then heated to produce an internal temperature of at least 104.4°C (220°F).

9. A ground red meat substitute obtainable by the process comprising:
(a) extracting salt-soluble proteinaceous material from poultry;
(b) flavouring and colouring the extracted proteinaceous material;
(c) cooking the extracted proteinaceous material until gelled into a solid mass;
and
(d) grinding the solid mass to produce comminuted pieces.

10. A food product comprising:
(a) the appropriate ingredients, less ground red meat, for making a food product chosen from the group consisting of taco fillings, pizza toppings, spaghetti sauces and chilli; and
(b) a ground red meat substitute obtainable by:
i) extracting salt-soluble proteinaceous materials from mechanically deboned poultry;
ii) flavouring and colouring the extracted proteinaceous material;
iii) cooking the extracted proteinaceous material until gelled or solidified into a solid mass; and
iv) grinding the solid mass to produce comminuted pieces.

## Patentansprüche

1. Verfahren für die Zubereitung eines von Geflügel stammenden, als Ersatz für gehacktes Rotfleisch geeigneten proteinischen Materials, welches Verfahren folgendes umfaßt:
(a) Extrahieren des salzlöslichen proteinischen Materials aus Geflügel;
(b) Kochen des extrahierten proteinischen Materials, bis es zu einer festen Masse geworden ist;
und
(c) Zermahlen der festen Masse zur Herstellung zerkleinerter Stücke.

2. Verfahren nach Anspruch 1, einschließlich des Schritts des Würzens und Färbens des extrahierten proteinischen Materials vor dem Kochen.

3. Verfahren nach Anspruch 1 oder 2, bei dem es sich bei dem Geflügel um maschinell entknochtes Geflügel handelt.

4. Verfahren nach Anspruch 1, 2 oder 3, bei dem der Schritt des Kochens (b) in Anwesenheit einer geringen Menge für Nahrungsmittel geeigneter Säure durchgeführt wird.

5. Verfahren nach Anspruch 4, bei dem die Säure Citronen-, Wein-, Bernstein-, Adipin-, Fumar- oder Äpfelsäure ist.

6. Verfahren nach Anspruch 4 oder 5, bei dem die Säuremenge genügend hoch ist, um eine Normalität von 0,003 bis 0,645 zu erzielen.

7. Verfahren nach einem der vorhergehenden Ansprüche, bei dem im Schritt (b) das extrahierte proteinische Material bei einer Temperatur von 60°C bis 260°C (140°F bis 500°F) gekocht wird.

8. Verfahren nach einem der vorhergehenden Ansprüche, bei dem nach der Stufe (c) Wasser zu den zerkleinerten Stücken zugegeben wird, die daraufhin zur Erzielung einer Innentemperatur von mindestens 104,4°C (220°C) erhitzt werden.

9. Ersatz von gehacktem Rotfleisch, der sich durch das Verfahren herstellen läßt, das folgendes umfaßt:
(a) Extrahieren von salzlöslichem proteinischem Material aus Geflügel;
(b) Würzen und Färben des extrahierten proteinischen Materials;
c) Kochen des extrahierten proteinischen Materials bis es zu einer festen Masse geworden ist;
und
(d) Zermahlen der festen Masse zur Herstellung zerkleinerter Stücke.

10. Ein Nahrungsmittelprodukt, das folgendes umfaßt:
(a) die geeigneten Zutaten, ohne gehacktes Rotfleisch, zur Herstellung eines Nahrungsmittelprodukts, das aus der Gruppe der Tacofüllungen, Pizzabeläge, Spaghettisoßen und Chilligerichte ausgewählt wird; und
(b) Ersatz von gehacktem Rotfleisch, herstellbar durch:
(i) Extrahieren salzlöslicher proteinischer Materialien aus maschinell entknochtem Geflügel;
(ii) Würzen und Färben des extrahierten proteinischen Materials;
(iii) Kochen des extrahierten proteinischen Materials bis es zu einer festen Masse geworden oder erstarrt ist; und
(iv) Zermahlen der festen Masse zur Herstellung zerkleinerter Stücke.

## Revendications

1. Un procédé de préparation d'une matière protéinique dérivée de la volaille convenant comme succédané de la viande rouge hachée, le procédé regroupant:
(a) extraction d'une matière protéinique soluble à l'eau à partir de volaille;
(b) cuisson de la matière protéinique extraite jusqu'à sa gélification en une masse solide; et
(c) broyage/hachage de la masse solide pour produire des fragments.

2. Un procédé selon la revendication 1, incluant l'étape d'ajout d'arômes et de colorants à la matière protéinique extraite avant sa cuisson.

3. Un procédé selon la revendication 1 ou 2, selon lequel la volaille est une volaille désossée mécaniquement.

4. Un procédé selon la revendication 1, 2 ou 3, dans lequel l'étape de cuisson (b) est effectuée en présence d'une faible quantité d'un acide de qualité alimentaire.

5. Un procédé selon la revendication 4, dans lequel l'acide est citrique, tartarique, succinique, adipique, fumarique ou malique.

6. Un procédé selon la revendication 4 ou 5, dans lequel la quantité d'acide est suffisante pour produire un titre situé entre 0,003 et 0,645.

7. Un procédé selon l'une quelconque des revendications précédentes, dans lequel, à l'étape (b), la matière protéinique extraite est cuite à une température de 60°C à 260°C.

8. Un procédé selon l'une quelconque des revendications précédentes, dans lequel, après l'étape (c), de l'eau est ajoutée aux fragments qui sont ensuite chauffés pour produire une température interne minimum de 104,4°C.

9. Un succédané de la viande rouge hachée obtenu par le procédé regroupant:
(a) extraction d'une matière protéinique soluble au sel à partir de volaille;
(b) ajout d'arômes et de colorants à la matière protéinique extraite;
(c) cuisson de la matière protéinique extraite jusqu'à sa gélification en une masse solide; et
(d) broyage/hachage de la masse solide pour produire des fragments.

10. Un produit alimentaire comportant:
(a) les ingrédients, moins de la viande rouge hachée, appropriés à la confection d'un produit alimentaire choisi à partir du groupe comportant des farces pour tacos (crêpes à la farine de maïs), des garnitures pour pizzas, des sauces pour spaghetti et du chili con carne; et
(b) un succédané de viande rouge hachée obtenu par:
i) extraction de matières protéiniques solubles au sel à partir de volaille désossée mécaniquement;
ii) ajout d'arômes et de colorants à la matière protéinique extraite;
iii) cuisson de la matière protéinique extraite jusqu'à sa gélification ou sa solidification en une masse solide; et
iv) broyage/hachage de la masse solide pour produire des fragments.
